(19) Europäisches Patentamt
European Patent Office
Office européen des brevets

(11) Veröffentlichungsnummer: **0 226 968 B1**

(12) # EUROPÄISCHE PATENTSCHRIFT

(45) Veröffentlichungstag der Patentschrift: **07.11.90**

(51) Int. Cl.[5]: **C09D 179/08**

(21) Anmeldenummer: **86117276.5**

(22) Anmeldetag: **11.12.86**

(54) **Verfahren zur Herstellung lagerstabiler Polyamidimidlacke und deren Verwendung.**

(30) Priorität: **17.12.85 DE 3544548**

(43) Veröffentlichungstag der Anmeldung:
**01.07.87 Patentblatt 87/27**

(45) Bekanntmachung des Hinweises auf die Patenterteilung:
**07.11.90 Patentblatt 90/45**

(84) Benannte Vertragsstaaten:
**AT CH DE ES FR GB IT LI NL**

(56) Entgegenhaltungen:
**DE-A- 2 542 706**
**US-A- 4 447 589**

**Derwent Abstracts, Nr. 83-719 413, Telesystems Questel, Paris WPIL**

(73) Patentinhaber: **Dr. Beck & Co. AG, Grossmannstrasse 105 Postfach 28 01 80, D-2000 Hamburg 28(DE)**

(72) Erfinder: **Reiter, Udo, Dr., Reger-Strasse 22, D-4404 Telgte(DE)**
Erfinder: **Oslowski, Hans-Josef, Dr., Maxdorfer Strasse 57, D-6700 Ludwigshafen(DE)**
Erfinder: **Boerzel, Paul, Dr., Juethornstrasse 55a, D-2000 Hamburg 70(DE)**

(74) Vertreter: **Weizel, Gunther, Dr. et al, c/o BASF Aktiengesellschaft Carl-Bosch-Strasse 38, D-6700 Ludwigshafen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft ein Verfahren zur Herstellung lagerstabiler Polyamidimidlacke durch Umsetzung von Tricarbonsäureanhydriden mit Polyisocyanaten und deren Verwendung als Isolationsmaterial für elektrische Leiter.

Die Verwendung von Polyamidimiden (= PAI) als hoch wärmebeständigen elektrischen Isolationsmaterialien ist schon seit längerem bekannt. Für elektrische Leiter, wie z.B. Spulendrähte aus Kupfer oder Aluminium, ist ihr Gebrauch sowohl als Grundlack (base-coat) als auch als Überzugslack (top-coat) zur Verbesserung der mechanischen und chemischen Eigenschaften üblich.

Zur Herstellung solcher PAI wird gewöhnlich entweder ein Monosäurechlorid eines Tricarbonsäureanhydrides mit einem Diamin umgesetzt (vgl. US-PS 3 865 785), wie z.B.

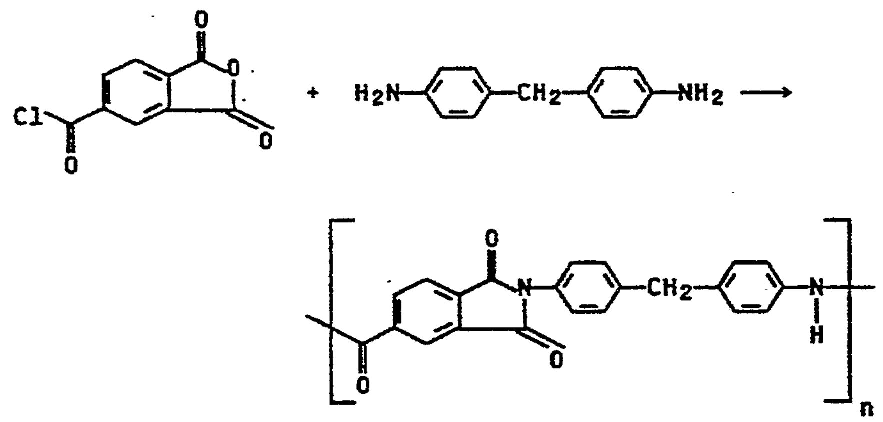

oder ein Tricarbonsäureanhydrid mit einem Diisocyanat (vgl. US-PS 3 541 038 bzw. US-PS 3 843 587), wie z.B.

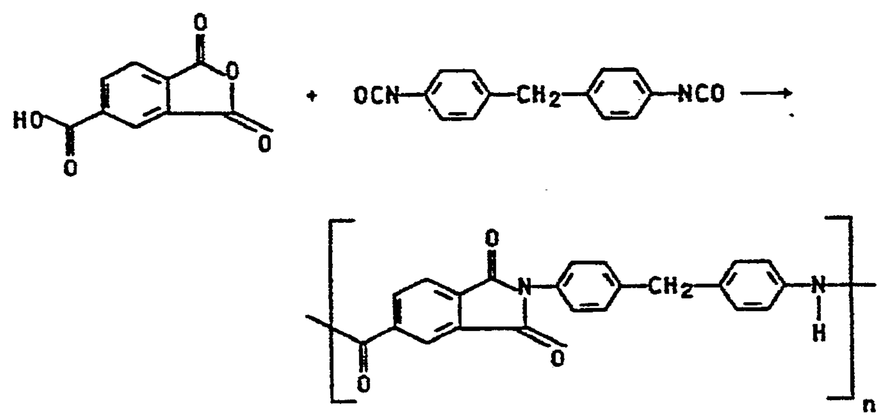

Das erste Verfahren erfordert hohe Aufwendungen zur Beseitigung des entstehenden Chloridanfalls und nimmt daher in seiner Bedeutung stetig ab.

Beim zweiten Verfahren ist es notwendig, zur Gewinnung eines Polymers mit dem geforderten Niveau hinsichtlich der thermischen, chemischen und mechanischen Eigenschaften sowie zur Vermeidung einer unkontrollierten Weitervernetzung (Gelierung) während der Lagerung durch Reste nicht abreagierten Isocyanates die Reaktionspartner in einem wasserfreien Lösungsmittelsystem wie z.B. N-Methylpyrrolidon (= NMP) bis zu einem relativ hohen Molekulargewicht umzusetzen.

Das hohe Molekulargewicht des entstehenden Harzes erfordert es jedoch, zur Erzielung ausreichend niedriger Viskositäten teure Speziallösungsmittel, wie z.B. NMP, zu verwenden, wobei trotzdem noch unwirtschaftlich niedrige Festkörpergehalte resultieren.

Eine mögliche Methode zur Absenkung des Molekulargewichtes bei weitgehendem Erhalt der mechanischen Eigenschaften des Polyamidimids ist in der US-PS 4 374 221 sowie der DE-PS 3 249 544 aufgezeigt. Gemäß der US-PS 4 374 221 wird Tricarbonsäureanhydrid und Diisocyanat im Verhältnis 1:1 eingesetzt und die Reaktion durch Zugabe von Isocyanatverkappungsmittel bei bereits fortgeschrittener Reaktion abgestoppt, wobei endständige Isocyanatgruppen bereits gebildeten Polyamidimids blockiert werden.

Nach der DE-PS 3 249 544 werden Tricarbonsäureanhydrid und Diisocyanat ebenfalls in äquimolaren Mengen eingesetzt und durch Zusatz von Isocyanatverkappungsmitteln vor, während oder nach der Kondensation die Lösungsstabilität verbessert, da bei erniedrigtem Molekulargewicht die Konzentration der endständigen funktionellen Gruppen des Harzes so zunimmt, daß die Viskosität des resultierenden Lacks allmählich im Laufe der Zeit ansteigt.

Durch Zugabe von 1–15% einer H-aktiven Substand zum vorgelegten Isocyanat bzw. zur Isocyanat-Tricarbonsäureanhydrid-Mischung vor, während oder nach der Kondensation wird ein Teil der Isocyanatfunktionen verkappt und damit der Weiterreaktion entzogen. Der Zusatz des Verkappungsmittels dient hier also nur zur Blockierung endständiger NCO-Gruppen. Die in der US-PS 4 374 221 beschriebenen Reaktionstemperaturen von bis zu 165°C beschränken die verwendeten Verkappungsmittel auf solche mit Entkappungstemperaturen deutlich oberhalb dieser Temperatur, wie z.B. auf, dort auch bevorzugt verwendeten, Benzylalkohol, während andererseits in der DE-PS 3 249 544 die Verwendung phenolischer Verkapper ausgeschlossen wird.

Ein weiterer und entscheidender Nachteil hinsichtlich der chemischen Eigenschaften der entstehenden Polyamidimide ergibt sich aus der statistisch bedingten, fast ausschließlich einseitigen Verkappung der terminalen NCO-Funktionen, da bei dem hohen Überschuß an Isocyanat das Verkappungsmittel auch bei mehrfunktionellen Verbindungen, z.B. beim noch nicht umgesetzten Diisocyanat, bevorzugt nur an einem Ende reagiert, sowie aus der Festlegung auf lineare Polymerstrukturen ohne Vernetzung.

Bei der Verwendung eines Gemisches verschiedener Isocyanate ist eine selektive Blockierung ebenfalls nicht möglich.

Es wurde nun überraschenderweise gefunden, daß die Zugabe bereits vollständig verkappter Polyisocyanate nach der Reaktion eines Tricarbonsäureanhydrids mit einem Unterschuß an Di- bzw. Polyisocyanat nicht nur zu hoch festkörperhaltigen Polyamidimidlacken führt, sondern zudem durch die dadurch mögliche Variationsbreite der eingesetzten Isocyanatzusätze und der verwendeten Verkapper die thermischen und mechanischen Eigenschaften des eingebrannten Lacks breit variiert werden können und man auf diese Weise Drahtlackierungen mit gegenüber dem Stand der Technik verbesserten technischen Eigenschaften erhält. Durch Einsatz tri- und mehrfunktioneller Isocyanate wird es dadurch auch möglich, das Polymer gezielt zu vernetzen mit einer deutlichen Eigenschaftsverbesserung als Resultat.

Gegenstand der vorliegenden Erfindung ist ein Verfahren zur Herstellung lagerstabiler Polyamidimidlacke durch Umsetzung von Tricarbonsäureanhydriden, die gegebenenfalls teilweise durch Tetracarbonsäuredianhydride oder Dicarbonsäuren ersetzt sein können, mit Polyisocyanaten, das dadurch gekennzeichnet ist, daß man in einem gegenüber Isocyanatgruppen inerten organischen Lösungsmittel ein Tricarbonsäureanhydrid, das gegebenenfalls teilweise durch Tetracarbonsäuredianhydride oder Dicarbonsäuren ersetzt ist, mit einem Polyisocyanat, das mindestens 2 Isocyanatgruppen aufweist, bei 90 bis 180°C umsetzt, mit der Maßgabe, daß man 0,7 bis 0,98 Isocyanatgruppen auf jede Anhydrid- und Carboxylgruppe einsetzt und dem Reaktionsgemisch nach der Reaktion vollverkapptes Polyisocyanat in einer Menge zufügt, daß das Molverhältnis von insgesamt eingesetzten Anhydrid- und Carboxylgruppen zu insgesamt eingesetzten, einschließlich der in verkappter Form vorliegenden Isocyanatgruppen 1:1 bis 1:1,3 ist und mit der weiteren Maßgabe, daß man nach Zugabe des vollverkappten Polyisocyanats Temperaturen erhält, bei denen keine Abspaltung des Verkappungsmitels aus dem vollverkappten Polyisocyanat erfolgt.

Bevorzugt ist es, 0,8 bis 0,975 Isocyanatgruppen auf jede Anhydrid- und Carboxylgruppe einzusetzen.

Gegenstand der vorliegenden Erfindung ist auch die Verwendung der erfindungsgemäß hergestellten Polyamidimidlacke, gegebenenfalls unter Zusatz von Verlaufmitteln, Katalysatoren und anderen Hilfsstoffen zur Beschichtung elektrischer Leiter, die gegebenenfalls bereits mit anderen Isolationsmaterialien überzogen sind, wobei man die Beschichtung in üblicher Weise einbrennt.

Zu den für das erfindungsgemäße Verfahren in Frage kommenden Aufbaukomponenten und Verfahrensbedingungen ist im einzelnen folgendes auszuführen.

Als Tricarbonsäureanhydride kommen solche der allgemeinen Formel

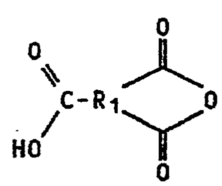

in Frage, worin $R_1$ für einen dreiwertigen aromatischen oder aliphatischen Rest steht, z.B. Trimellithsäureanhydrid, Naphthalintricarbonsäureanhydrid und/oder Benzophenontricarbonsäureanhydrid. Bevorzugt ist Trimellithsäureanhydrid. Es können auch Gemische derartiger Tricarbonsäureanhydride verwendet werden. Die Tricarbonsäureanhydride können teilweise durch Tetracarbonsäuredianhydride oder Dicarbonsäuren ersetzt sein.

Als Tetracarbonsäuredianhydride, durch die 25 Gew.-%, vorzugsweise 10 Gew.-% der Tricarbonsäureanhydride ersetzt sein können, kommen beispielsweise in Frage Benzoltetracarbonsäuredianhydride, wie Pyromellithsäuredianhydrid, Benzophenontetracarbonsäuredianhydrid oder deren Gemische.

Als Dicarbonsäuren, durch die bis zu 80 Gew.-%, vorzugsweise bis zu 30 Gew.-% der Tricarbonsäureanhydride ersetzt sein können, kommen aliphatische Dicarbonsäuren, wie z.B. Bernsteinsäure, Adipinsäure und/oder Azelainsäure sowie vorzugsweise aromatische Dicarbonsäuren, wie Terephthalsäure, Isophthalsäure, 2,6-Naphthalindicarbonsäure oder deren Gemische in Betracht.

Als Polyisocyanate kommen für die Umsetzung mit Tricarbonsäureanhydrid solche der allgemeinen Formel

$$R_2\text{–}(NCO)_n$$

in Betracht, wobei $R_2$ für einen aliphatischen oder aromatischen organischen Rest steht und n für eine Zahl von 2 bis 3 steht. Bevorzugt sind Diisocyanate, wie Toluylendiisocyanat, Hexamethylendiisocyanat, Isophorondiisocyanat, Diphenylmethandiisocyanat sowie deren Gemische.

Als vollverkappte Polyisocyanate kommen mit üblichen Verkappungsmitteln geblockte Di- und Polyisocyanate in Frage. Die zugrundeliegenden Di- und Polyisocyanate können mit den oben genannten identisch oder davon verschieden sein, wie z.B. Reaktionsprodukte der oben genannten Diisocyanate mit Polyalkoholen, (z.B. Desmodur® AP der Fa. Bayer AG), Trimerisierungsprodukte (z.B. Desmodur® CT), Biurettriisocyanate u.a. mehrfunktionelle Isocyanate.

Als Verkappungsmittel für die vollverkappten Di- und Polyisocyanate kommen die üblicherweise hierfür verwendeten organischen Verbindungen mit aktivem Wasserstoffatom in Frage, wie –NH, –OH, –CH-acide Verbindungen, wie Phenole und alkylsubstituierte Phenole, Alkohole mit 1 bis 16 Kohlenstoffatomen, Lactame, Imide, Oxime; z.B. Phenol, Kresol, Butanol, Äthanol, 2-Äthylhexanol, Caprolactam, Phthalimid, Methylethylketonoxim und/oder Malonsäuredialkylester.

Als gegenüber Isocyanatgruppen inerte organische Lösungsmittel kommen in Frage N-Methylpyrrolidon, Dimethylformamid, Dimethylacetamid, bevorzugt N-Methylpyrrolidon (= NMP), gegebenenfalls unter Zusatz von aromatischen Kohlenwasserstoffen, wie Xylol oder Gemische aromatischer Kohlenwasserstoffe, wie z.B. Solvesso® 100.

Die Umsetzung eines Unterschusses an Di- oder Polyisocyanat mit dem Tricarbonsäureanhydrid, bzw. dessen Gemisch mit Di- und/oder Tetracarbonsäure(anhydriden) kann bei Temperaturen zwischen 90 bis 180°C erfolgen.

Für die Anwendung der erfindungsgemäß hergestellten Polyamidimidlacke zum Überziehen elektrischer Leiter, wie z.B. Drähte aus Kupfer, Kupferlegierungen oder Aluminium, können diesen Lacken Entkappungs- bzw. Härtungskatalysatoren, wie z.B. Diazabicyclooctan (DABCO), Eisenacetylacetonat und/oder Verlaufmittel, wie z.B. Phenolharze oder höhere Alkohole, wie z.B. Benzylalkohol, oder andere übliche Hilfsstoffe zugefügt werden.

Ebenso kann durch Einkondensieren von Polyolkomponenten, wie z.B. Trishydroxyethylisocyanat (THEIC), oder von Polyestern das Gesamtsystem zu einem Polyesteramidimid ergänzt werden.

Der nach Verdünnung erhaltene Polyamidimidlack kann direkt auf dem elektrischen Leiter lackiert und eingebrannt werden oder auch auf oder unter einem anderen isolierenden Material, wie z.B. Polyester, Polyesterimide, Polyurethane, Polyimide usw., als base-coat bzw. over-coat.

Nach dem erfindungsgemäßen Verfahren erhält man hoch festkörperhaltige PAI-Lacke von besonders guter Lagerstabilität, die, auf elektrischen Leitern eingebrannt, Lacküberzüge ergeben, deren Eigenschaften je nach Verwendungszweck über die Art der verwendeten Komponenten und insbesondere über die Art des verkappten Isocyanatzusatzes gezielt auf die jeweiligen Erfordernisse eingestellt werden können.

Beispiel 1

326 g trockenes N-Methylpyrrolidon (NMP) wurden vorgelegt und unter Stickstoff mit 128 g Trimellithsäureanhydrid (TMA) sowie 150 g 4,4'-Diphenylmethandiisocyanat (MDI) versetzt. Innerhalb von 5–6 Stunden wurde kontinuierlich auf 150°C aufgeheizt und nach dem Abkühlen auf etwa 50°C 124 g Kresolverkapptes MDI als 25 gew.-%ige Lösung in NMP dazugegeben. Mit einem 1:4 Gemisch aus einem Aromatengemisch (Solvesso 100) und NMP wurde verdünnt. Man erhielt einen Lack mit einem Festkörpergehalt von 42,3 Gew.% (1 Stunde/180°C) und einer Viskosität von 1940 mPas (RT) bei ausgezeichneter Lagerstabilität.

Beispiel 2

Es wurde ein Polyamidimidharz wie in Beispiel 1 hergestellt, wobei an Stelle des Kresol-verkappten MDI 124 g Benzylalkohol-verkapptes MDI als 25 gew.%ige Lösung in NMP zugegeben wurde. Nach Verdünnung erhielt man einen Lack mit einem hohen Festkörpergehalt bei ausgezeichneter Lagerstabilität.

Die Applikation der erfindungsgemäßen Polyamidimidlacke auf Elektroisolierdrähte kann nach Einstellen geeigneter Viskositäten über konventionelle Auftragsysteme erfolgen, ebenso das Einbrennen des Lackes in den üblichen Öfen bei geeigneten Temperaturen (300 bis 800°C) in Abhängigkeit von der Lackierungsgeschwindigkeit.

Die Eigenschaftswerte (gemessen nach DIN 46 453) des nach dem erfindungsgemäßen Verfahren hergestellten isolierten Drahtes lagen in Abhängigkeit von den Einbrennbedingungen innerhalb der unten angegebenen Grenzen. Als Vergleichsbeispiel wurde ein handelsüblicher Polyamidimidlack herangezogen.

| | Beispiel 1 - 2 | Vergleichsbeispiel |
|---|---|---|
| Festkörper (1200 mPas): | 27 - 33 % | 20 - 22 % |
| Oberflächenhärte: | 5 - 6 H | 5 H |
| Zerreißprobe: | in Ordnung | in Ordnung |
| Wickelfestigkeit (1xD): | 20 - 25 % Vordehnung | 10 % Vordehnung |
| heat-shock: | 250°C | 250°C |
| tan δ Steilanstieg: | 170 - 210°C | 170 - 200°C |

## Patentansprüche

1. Verfahren zur Herstellung lagerstabiler Polyamidimidlacke durch Umsetzung von Tricarbonsäureanhydriden, die gegebenenfalls teilweise durch Tetracarbonsäuredianhydride oder Dicarbonsäuren ersetzt sein können, mit Polyisocyanaten, dadurch gekennzeichnet, daß man in einem gegenüber Isocyanatgruppen inerten organischen Lösungsmittel ein Tricarbonsäureanhydrid, das gegebenenfalls teilweise durch Tetracarbonsäuredianhydride oder Dicarbonsäuren ersetzt ist, mit einem Polyisocyanat, das mindestens 2 Isocyanatgruppen aufweist, bei 90 bis 180°C umsetzt, mit der Maßgabe, daß man 0,7 bis 0,98 Isocyanatgruppen auf jede Anhydrid- und Carboxylgruppe einsetzt und dem Reaktionsgemisch nach der Reaktion vollverkapptes Polyisocyanat in einer Menge zuführt, daß das Molverhältnis von insgesamt eingesetzten Anhydrid- und Carboxylgruppen zu insgesamt eingesetzten, einschließlich der in verkappter Form vorliegenden Isocyanatgruppen 1:1 bis 1:1,3 ist und mit der weiteren Maßgabe (1), daß man nach Zugabe des vollverkappten Polyisocyanats Temperaturen einhält, bei denen keine Abspaltung des Verkappungsmittels aus dem vollverkappten Polyisocyanat erfolgt.

2. Verfahren nach Anspruch 1, dadurch gekennzeichnet, daß man 0,8 bis 0,975 Isocyanatgruppen auf jede Anhydrid- und Carboxylgruppe einsetzt.

3. Verwendung der nach einem Verfahren gemäß den Ansprüchen 1 oder 2 hergestellten Polyamidimidlacke, gegebenenfalls unter Zusatz von Verlaufmitteln, Katalysatoren und anderen Hilfsstoffen zum Überziehen elektrischer Leiter, die gegebenenfalls bereits mit anderen Isolationsmaterialien beschichtet sind, wobei man die Überzüge in üblicher Weise einbrennt.

## Claims

1. A process for preparing a polyamidoimide coating having a long shelf life by reacting a tricarboxylic anhydride, some of which may be replaced by a tetracarboxylic dianhydride or a dicarboxylic acid, with a polyisocyanate, wherein a tricarboxylic anhydride, some of which may have been replaced by a tetracarboxylic dianhydride or a dicarboxylic acid, is reacted at from 90 to 180°C with a polyisocyanate which has 2 or more isocyanate groups in an organic solvent which is inert to isocyanate groups, with the proviso that from 0.7 to 0.98 isocyanate group is used per anhydride and carboxyl group, and a completely blocked polyisocyanate is added to the reaction mixture, after the reaction, in an amount such that the molar ratio of all anhydride and carboxyl groups employed to all isocyanate groups employed, including those present in blocked form, is from 1:1 to 1:1.3 and with the further proviso that, after the completely blocked polyisocyanate has been added, temperatures which are sufficietly low to avoid elimination of the blocking agent from the completely blocked polyisocyante are maintained.

2. A process as claimed in claim 1, wherein from 0.8 to 0.975 isocyanate group is used per anhydride and carboxyl group.

3. Use of a polyamidoimide coating prepared by a process as claimed in either of claims 1 and 2, with or without the addition of leveling agents, catalysts and other assistants, for coating electric conductors which may already be coated with other insulating materials, the coating being baked in a conventional manner.

## Revendications

1. Procédé de préparation de peintures polyamidimides stables au stockage, par réaction d'anhydrides tricarboxyliques, qui peuvent être remplacés éventuellement partiellement par des dianhydrides tétracarboxyliques ou des acides dicarboxyliques, avec des polyisocyanates, caractérisé par le fait que l'on fait réagir, entre 90 et 180 degrés C, dans un solvant organique inerte vis-à-vis des groupes isocyanate, un anhydride tricarboxylique, qui a été remplacé éventuellement, partiellement, par des dianhydrides tétracarboxyliques ou des acides dicarboxyliques, avec un polyisocyanate qui possède au moins deux groupes isocyanate, à condition que l'on introduise 0,7 à 0,98 groupe isocyanate sur chaque groupe anhydride et carboxyle et qu'on amène au mélange de réaction du polyisocyanate totalement bloqué à ses extrémités de chaîne après la réaction, en quantité telle que le rapport molaire entre les groupes anhydride et carbonyle introduits au total et les groupes isocyanate introduits au total, y compris ceux se trouvant sous forme masquée, soit de 1/1 à 1/1,3 et à condition encore qu'après apport du polyisocyanate totalement masqué, on maintienne des températures auxquelles il ne se produit aucune séparation de l'agent de masquage du polyisocyanate totalement masqué.

2. Procédé selon la revendication 1, caractérisé par le fait que l'on introduit 0,8 à 0,975 groupe isocyanate sur chaque groupe anhydride et carboxyle.

3. Utilisation des peintures polyamidimides préparées par un procédé selon les revendications 1 et 2, éventuellement avec addition d'agents d'écoulement, de catalyseurs et autres auxiliaires, pour enduire des conducteurs électriques qui sont éventuellement déjà recouverts d'autres matières d'isolation, les enduits étant cuits de manière usuelle.